# EUROPEAN PATENT APPLICATION

(11) **EP 1 130 845 A2**
(43) Date of publication of application: **05.09.2001**
(21) Application number: 01301338.8
(22) Date of filing: 15.02.2001
(51) Int. Cl.: H04L 12/18, G06F 9/46, H04L 29/06

(54) **Publish/subscribe system**

(30) Priority: 18.02.2000 US 507338
(71) Applicant: Agilent Technologies Inc. a Delaware Corporation, Palo Alto, CA 94303 (US)
(72) Inventor: Sventek, Joseph S., Edingburgh EH12 5BD (GB); Holland, Jerremy, Los altos Hills, CA 94024 (US); Pollock, Graham S., Cupertino, CA 95014 (US)
(74) Representative: Powell, Stephen David

(57) **Abstract**

A publish/subscribe apparatus (10) comprises a publisher (28), a subscriber (32), a communication pathway (11), and a filtering mechanism (20). The publisher (28) is operative to generate a message instance. The subscriber (32) is operative to receive the message instance. The communication pathway (11) has a publish/subscribe mechanism (38). The filtering mechanism (20) has a first filter (24) provided by the publisher (28) and a second filter (26) provided by the subscriber (32).

## Description

This invention pertains to the delivery of messages between publishers and subscribers and in particular to a publish/subscribe apparatus and method utilizing pre- and post-filtering. More particularly, this invention relates to publish/subscribe (PS) mechanisms having an infrastructure based upon message type information that defines channels, wherein subscribers specify a type of message they wish to receive and further specify a filtering expression in terms of attributes of messages of that message type.

The availability of data distribution technologies has grown in conjunction with the development and adoption of computer network systems, the Internet, and the World Wide Web (WWW). One example of a data distribution technology is "push technology" wherein selected data is automatically delivered to a client, or user's computer, at prescribed intervals or in response to the occurrence of some event. Examples of push technologies are PointCast and Castanet. PointCast is an Internet news system available from PointCast, Inc., of Cupertino, CA (www.pointcast.com). Castanet is a family of Java-based delivery systems for publishing and automatically distributing application updates and other published materials via the Internet and intranets that is available from Marimba, Inc., of Palo Alto, CA (www.marimba.com).

Another recent area of growth in data distribution technologies is Publish/Subscribe (PS) systems which provide a source of information to users that they can selectively retrieve. Publish/Subscribe systems use a Publish/Subscribe mechanism to provide a service that can be free or fee-based. Information is typically provided to a user, or client, via e-mail or the Web (World Wide Web). One example of a Publish/Subscribe system is provided within Macintosh System 7, from Apple Computer, Inc., of Cupertino, CA (www.apple.com), wherein hot links capabilities are provided between files. With the Macintosh System 7 PS system, all or part of a file can be published into an "edition file," which is then imported into a subscriber file. Once any of the published files are updated, the subscriber file is also updated.

Publish/Subscribe (PS) mechanisms have recently become quite popular, particularly since they hold the promise of supporting scalable distributed implementations of near real-time applications. Scalable means that the implementation is capable of being changed in size and configuration, and typically refers to a computer system application's ability to expand. Distributed refers to distributed computing wherein multiple computers are used within an organization or network rather than using one centralized system.

For example, U.S. Patent No. 5,557,798 describes one PS mechanism, and is incorporated herein by reference. There exist several key aspects to a Publish/Subscribe (PS) mechanism. First, publishers are unaware of the identities of other publishers, as well as the identities of any subscribers. Secondly, subscribers are unaware of the identities of other subscribers, as well as the identities of any publishers. Finally, the Publish/Subscribe (PS) infrastructure provides particular guarantees that messages sent by a publisher to interested subscribers will be delivered.

Most subscribers are only interested in a subset of the messages that are sent over a publish/subscribe (PS) mechanism. In order to address this interest in only a subset of messages, most publish/subscribe (PS) implementations provide a flat name space for partitioning the total space of messages that the PS mechanism will transport. For purposes of this disclosure, -each of these partitions will be termed a channel. The name used to identify a particular channel can be arbitrary (for a simple case), or may denote a particular subject/topic (for a more complex case). A subscriber using the PS mechanism will indicate a particular channel in which they have an interest. A publisher then publishes a message to that particular channel. Pursuant to the semantics of a PS mechanism, each subscriber that has subscribed to a particular channel will receive messages that have been published to that particular channel since the time at which they submitted their subscription request. Implicit in the subscriber's selection of a channel is knowledge of the structure of the messages sent over that channel. In other words, each publisher will only send messages with that particular structure, and each subscriber expects to receive messages corresponding to that structure.

A more flexible alternative implementation occurs when the subscription is extended to include specific predicates. The space of messages is structured using a message schema (or entire database) with attributes, and a subscription is a predicate over those attributes. This alternative implementation requires that a specific type structure for these searchable attributes be defined for different message types. There is still an implied structure for the messages, since the attributes are metadata about the messages. This implied structure also introduces a problem in that the attributes may duplicate information in the message, thus leading to excess overhead.

As used herein, metadata is data that describes other data. For example, data dictionaries and repositories form examples of metadata. A meta tag that is used to describe the content of a Web page is referred to as metadata. The term "metadata" may also refer to any file or database that holds information about another database's structure, attributes, processing, or changes.

Therefore, there exist two basic mechanisms for permitting a subscriber to indicate the subset of messages in which the subscriber is interested. First, the message space is partitioned into a number of channels. A subscription request requires that the subscriber indicate the channel(s) in which the subscriber is interested. Hence, the subscriber needs to be capable of handling whatever message structure is defined for each channel to which the subscriber has subscribed.

Secondly, a metadata schema, in terms of message attributes, is defined for all messages that can be sent over the PS mechanism. The subscriber provides a constraint expression in terms of attribute values that a message of interest is required to match. This model essentially views the PS mechanism as a single channel, with de-multiplexing occurring via the matching of attributes. However, the subscriber still needs to be able to handle whatever message structures are defined for matching messages. Furthermore, there is overhead introduced when implementing a metadata mechanism, since the metadata attributes may duplicate data values in the message.

In essence, the above-described two mechanisms, channel-partitioned message space and metadata schema, describe the endpoints of a spectrum for specification of messages of interest. Therefore, improvements are needed to enhance the efficient use of PS mechanisms so that a subscriber can operate somewhere in the middle of this spectrum. Furthermore, improvements are needed to eliminate any extraneous overhead that is introduced by the use of a metadata mechanism.

### A. PS Mechanism Delivery Infrastructure

A publish/subscribe (PS) mechanism relies on a delivery infrastructure. Two models for such a delivery infrastructure are described below. In other words, PS mechanisms can be animated in two different ways. According to one model, published messages are shipped to a message server. The message server then delivers the messages to interested subscribers. This model is referred to as a "*store-and-forward infrastructure*".

According to another model, published messages are multi-cast over a network underlying the PS mechanism. The act of subscription has caused subscribers to be listening on the appropriate multi-cast addresses for published messages. This model is referred to as a "*multi-cast infrastructure".*

Application of each of the models described below will be characterized with regard to the two above-described types of infrastructure.

### B. Filtering Logic Location

### 1. Assumptions

According to presently understood prior art implementations, filtering logic has been incorporated into PS mechanisms with the following assumptions. Typically, each message sent over a PS mechanism has the following structure:

### 2. PS Mechanism Structure Pseudo-Code

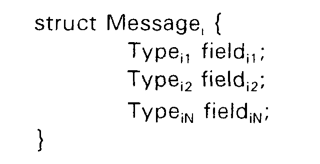

According to such prior art implementations, when a subscriber desires to register with a PS mechanism, the subscriber is asked to specify a filtering expression. A typical filtering expression will include the following elements. One element identifies the presence of a particular field. For example, "present(fieldₖ)" provides one such element. Another element performs a comparison of field values with constants or other field values. For example, "fields <42, field₅! = field₄₇" provides another such element. A further element identifies the ability to check for the inclusion of a field value in a set of constants. For example, "field₂ in {1 4 9 16 25}" provides one such further element. Yet another element identifies the ability to check for a partial match of a string value. For example, "field_{3_} "∧+44-131-"" provides an exemplary even another element. Yet even another element identifies logical connectives of these atoms. For example, "present(field₁) && field₁ < 42, field₁ < 42 _ field₁ = = 85" is another element, wherein evaluation of the connectives are terminated as soon as the result is known. A further element identifies logical negation. For example, "!present(field₄)" provides another element. Even another element identifies grouping operators that override default precedence. For example, "!(present(field₁) && present(field₅)]" provides such an element.

An additional requirement is made such that referral to a field implicitly will invoke the present() operator, as any reference to a field must fail if that field is not present. For example, "fieldₖ = = 22" is equivalent to"[present(fieldₖ) && fieldₖ = = 22]".

### a. Completely subscriber-side model

The simplest model for locating filtering logic within a PS mechanism is to have each published message be received on each host that has one or more subscribers to the PS mechanism. Logic resident at that host is then used to apply the filtering expression to the message, then deliver any messages that match the filtering expressions to appropriate subscribers on that host.

In the case of a store-and-forward infrastructure, publishers simply send each message to the server. For the case where the store-and-forward infrastructure implements true subscriber-side filtering, the server simply routes a copy of each message to each subscriber. Alternatively, the server can apply the filtering to the message metadata, and the server only routes a copy of a particular message to those subscribers whose filtering expression is matched. However, such implementation occurs at some expense in that the filtering expression of a subscriber must be forwarded to the server at subscription time, and the server must apply the filtering expression for each subscriber to each message. All published messages are sent to the server. Thereafter, all messages/matching messages are then sent on to the subscribers, depending upon the scenario.

In the case of a multi-cast infrastructure where it is assumed that all filtering is done at the subscriber side and that there is no channel structure, it is required that there be only a single multi-cast address, as all messages are distributed by the network to all subscribers, where the filtering expressions are applied. Since all filtering is assumed to be done at the subscriber side and there is no channel structure, all messages must be received by all subscribers in order to apply the filtering constraints. In the case of a multi-cast infrastructure, this only requires the presence of a single broadcast address, since each subscriber will subscribe to all messages on that multi-cast address and all publishers will publish all messages to that multi-cast address. If a name/subject/topic-based system chooses to exploit multiple and multi-cast addresses in order to segregate message traffic, then each subscriber must subscribe to each of these multi-cast addresses in order to receive all messages. However, there can also be multiple multi-cast addresses. All messages are placed on the network, and received by all subscribers. However, in the case of name/subject/topic-based mechanisms, the classification of messages into storage locations, or buckets, by the publisher may prevent all messages from being received by all subscribers.

However, the presently described subscriber-side model is best suited for cases where each subscriber wants to see a large percentage of all messages.

### b. Completely publisher-side model

At the other extreme, all of the filtering logic within a PS mechanism can be pushed to the publisher side. Logic on the publisher host is used to apply the filtering expression for each subscriber to each message to be published, sending the message to that subscriber for the cases where the message satisfies the identified requirements of the filtering expression.

Such a model makes several requirements on a PS mechanism. First, when a subscriber registers its filtering expression, it is required that the filtering expression be sent to all of the publishers in the system. Secondly, the use of multi-cast communication is not necessary, as the publisher side can simply uni-cast matching messages to the corresponding subscriber.

Applied to a store-and-forward infrastructure, such a model requires that the filtering expressions from subscription requests be forwarded to the server at subscription time. For the simplest form of the model, the publishers simply send all messages to the server, and the server applies the filtering expression. Alternatively, if publishers are required to register prior to beginning to publish messages, the server can forward filtering expressions to each registered publisher to truly push the filtering activity into the publishing host.

The presently described completely publisher-side model is favored for cases where there are a small number of subscribers, and each subscriber is interested in a very small percentage of all messages.

### c. Hybrid model

Many practical and commercially successful systems will most likely not fit nicely into either of the two above-described models. It is often the case that some subscribers will be interested in most messages, while other subscribers will be interested in a very small percentage of all messages. It is, therefore, likely that many successful systems need to implement some of the matching on the publisher side and other of the matching on the subscriber side.

Generally, a store-and-forward infrastructure is understood to be a little more flexible than a multi-cast infrastructure when attempting to meet the needs of such a hybrid configuration. This resulting flexibility is not surprising, since a store-and-forward server provides a level of indirection, and it is well known that indirection is a common technique in software systems for achieving flexibility. Unfortunately, for many emerging application areas, the extra delay introduced by such an indirection proves to be unacceptable. Therefore, the following discussion of prior art infrastructure will focus on multi-cast infrastructures only. Where the mechanism being discussed can also be applied to a store-and-forward infrastructure, it will be identified.

### 3. Characteristics of a hybrid model

There exist several ways to characterize a hybrid model. First, keep the interrupt load, in terms of received messages, commensurate with the percentage of messages of interest to the subscribers on that particular host. That is, minimize the processing load on the receiving hosts. Secondly, keep the processing load, both for matching and message sending, reasonably bounded for the publishers. That is, minimize processing load on the sending hosts. Finally, to the extent possible, avoid multiple sends of the same message. If possible, avoid -sending messages that are of no interest to any subscribers. In other words, minimize the communication load on the network.

Generally, it proves to be impossible to minimize all of the above for all possible configurations of applications and hosts. What is really required is a model that permits configuration of the system for maximal performance. Following are a list of individual characteristics for such a model:

### a. Minimize the processing load on the receiving hosts

The best possible case occurs when the publishing side is required to perform all of the filtering, and there is a single subscriber provided on each receiving host. Accordingly, it is guaranteed that only messages of interest to the single subscriber are ever received on the receiving host.

For the case where there are two or more subscribers provided on a single receiving host, the performance of all filtering on the publishing side still works effectively if the respective messages of interest do not overlap. If they do overlap, the same message will be sent two or more times to the same host.

For the case where there are two or more subscribers provided on different hosts and the subscribers' message interests overlap, then each message will be sent two or more times over the network. This result is realized even though the processing load has been minimized on each host.

As a result of the above shortcomings, there is a need to account for overlapping interests. If there was a way to capture overlapping interests, such that each overlap area could be assigned to a different multi-cast channel, then the processing load could be minimized on the receiving hosts. Furthermore, the occurrence of multiple sends of the same message could also be minimized.

### b. Minimize the processing load on the sending hosts

The most favorable scenario, capable of being addressed by prior art techniques, occurs when filtering capabilities are required on the subscriber side, and most subscribers are interested in most messages. In this situation, the publisher is not required to do any processing in order to determine if a message should be sent.

However, for the case where some subscribers are interested in only a small percentage of messages, then implementation of total subscriber-side filtering will abuse the network and the processing cycles of those subscribers.

Therefore, there exists a need for an improved technique for determining equivalence classes for which a particular message satisfies membership requirements, and for matching interest in these equivalence classes to interested subscribers. If there existed a low-overhead way to determine the equivalence classes that a particular message satisfies and the publishing hosts were aware of which equivalence classes are of interest to registered subscribers, then only messages in the desired equivalence classes would be shipped. This would minimize the processing load on the sending hosts as well as reduce the network load. However, there would still be a drawback for the case where messages satisfy two or more equivalence classes. For such a case, it might be necessary to perform multiple transmissions of the same message, assuming that each equivalence class is mapped to a different multi-cast address.

### c. Minimize the communication load on the network

The most favorable scenario occurs when only messages of interest to at least one subscriber are transmitted. If there are two or more subscribers interested in the same message, the message is only transmitted once.

The principal mechanism for preventing multiple transmissions is to use multi-cast, wherein the network-level Internet Protocol (IP) is used to achieve the required 1-to-many fan-out. Implementation of such a mechanism requires that one be able to map from overlapping interest to a multi-cast address. As a practical matter, IP multi-cast support on commercially available network interface cards typically bounds the number of multi-cast addresses that a particular host can use. Such a requirement favors some form of equivalence class/type structure be imparted to messages, with each equivalence class being mapped to a multi-cast address.

A benefit is provided according to this prior art technique because unnecessary transmissions can be avoided if the interests of subscribers are known on the publisher side of the PS mechanism. However, if one of the subscribers has expressed interest in all messages, then all messages will have to be transmitted.

In summary, the above-described existing publish-subscribe (PS) mechanisms do not provide sufficient flexibility to support scaling to large numbers of messages, publishers, and/or subscribers due to inefficient use of network bandwidth. Those PS mechanisms that are based on channel names, topics, and/or subjects force all messages to be sent over the appropriate channels for the respective message. However, this occurs even if none of the messages will be subsequently used by any of the subscribers. Those PS mechanisms that are based on the metadata approach require that all messages be sent to a store-and-forward server, then be assigned their metadata attributes. For these cases, only those messages that match the filtering expressions of subscribers are then subsequently sent on to subscribers.

Accordingly, there exists a need to improve the dissemination of messages within a publish-subscribe mechanism.

An apparatus and method are provided for filtering message types that are delivered when mapping message types to multi-cast addresses. The filtering is effective at minimizing the interrupt load on subscriber hosts.

According to one aspect, a publish/subscribe apparatus is provided which is comprised of a publisher, a subscriber, a communication pathway, and a filtering mechanism. The publisher is operative to generate a message instance. The subscriber is operative to receive the message instance. The communication pathway has a publish/subscribe mechanism. The filtering mechanism has a first filter provided by the publisher and a second filter provided by the subscriber.

According to another aspect, a publish/subscribe apparatus is provided which is comprised of a publisher client, a subscriber client, a communication pathway, and a publish/subscribe mechanism. The publisher client has a first filter and is operative to generate a channel instance corresponding with subscribed message types using the first filter. The subscriber client has a second filter and is operative to subscribe to a message type and receive message instances contained within the corresponding channel instance, and the second filter is operative to filter particular instances of the message types using attributes of the message types. The communication pathway extends between the publisher client and the subscriber client. The publish/subscribe mechanism is carried by the communication pathway and is operative to receive the corresponding channel instance for receipt by the subscriber client via the second filter.

According to yet another aspect, a method for filtering the transmission of messages over a publish/subscribe mechanism is provided. The method provides a publisher, a subscriber, a communication pathway extending between the publisher and the subscriber, and a filter mechanism, wherein the communication pathway is operative to convey publish/subscribe message instances from the publisher to the subscriber. The method also notifies the publisher of message types currently subscribed to by the subscriber, transmits message types for which there is at least one subscriber to that message type, and receives messages having attributes designated by the subscriber from the transmitted message types.

Preferred embodiments of the invention are described below with reference to the following accompanying drawings depicting examples embodying the best mode for practicing the invention.

Fig. 1 is schematic block diagram illustrating a Publish/Subscribe (PS) mechanism in a publication and subscription system according to one embodiment of the invention realized over a client/server network environment.

Fig. 2 is a logic flow diagram illustrating one method of implementing Applicant's invention.

### A. Overview

An apparatus and method are provided for implementing pre-filtering and post-filtering within publish/subscribe (PS) mechanisms using a multiple-component filtering expression.

Reference will now be made to a preferred embodiment of Applicant's invention. One exemplary implementation is described below and depicted with reference to the drawings comprising a Publish/Subscribe mechanism that in one embodiment is implemented over a network. While the invention is described via a preferred embodiment, it is understood that the description is not intended to limit the invention to this embodiment, but is intended to cover alternatives, equivalents, and modifications such as are included within the scope of the appended claims.

In an effort to prevent obscuring the invention at hand, only details germane to implementing the invention will be described in great detail, with presently understood peripheral details being incorporated by reference as being presently understood in the art.

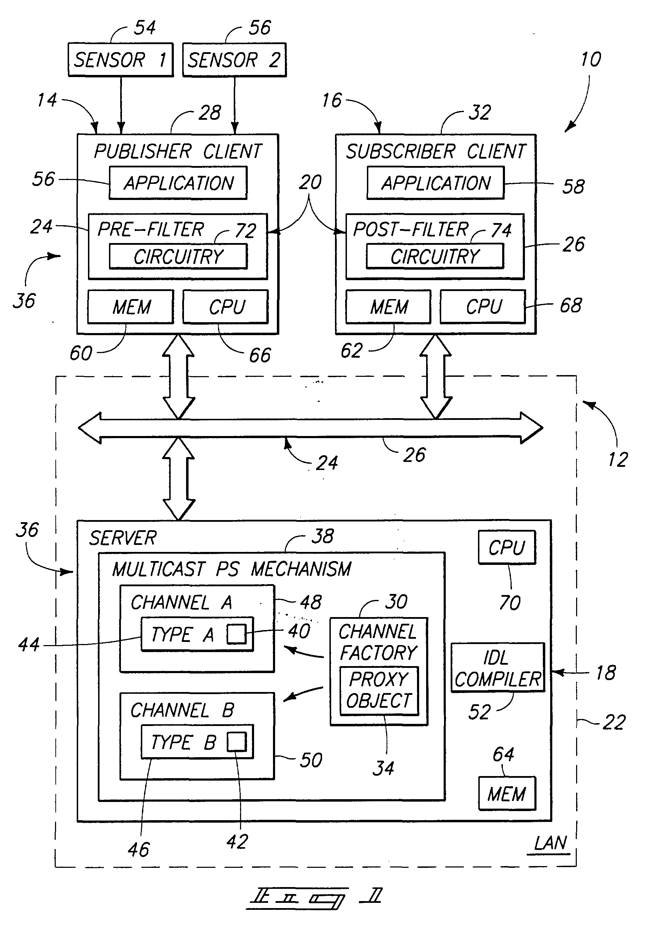

Figure 1 illustrates a polymorphic publish/subscribe (PS) apparatus identified generally by reference numeral 10 having a multiple component filtering mechanism. According to one construction, apparatus 10 is implemented over a communication pathway 11 within a client/server network environment 12 which includes clients 14, 16 and server 18. A client/server network environment 12 includes communication pathway 11, which in one form includes a network 22. Also, according to one construction, network 22 is a local area network. Additionally, or optionally, such local area network 22 is provided within the Internet 24. Accordingly, network 22 can also include the Internet 24. According to an even further construction, Internet 24 is the World Wide Web (WWW) 26.

As shown in Figure 1, client 14 comprises a publisher computer (or publisher) 28, and client 16 comprises a subscriber computer (or subscriber) 32. Infrastructure 36 is provided by network 22 and computers 14 and 16. As utilized herein, "publisher" refers to any general-purpose machine capable of processing data by way of a set of instructions which enables a user to provide a source of information that users, or subscribers, can selectively retrieve by way of a communication pathway. Similarly, as utilized herein, "subscriber" refers to a general-purpose machine that processes data according to a set of instructions and which enables a user to selectively retrieve such source of information by way of a communication pathway. Also as utilized herein, "client" refers to a workstation or personal computer provided within a client/server environment.

According to Figure 1, publish/subscribe (PS) apparatus 10 is shown implemented within a client/server network environment. As shown in Figure 1, apparatus 10 is implemented over communication pathway 11, wherein communication pathway 11 includes network 22. However, it is understood that communication pathway 11 can be realized by other specific forms of communication pathways.

According to one alternative implementation, apparatus 10 is implemented on a single computer, instead of being implemented across a local area network. Accordingly, a physical network is not necessarily required pursuant to this alternative implementation. By implementing apparatus 10 within a single computer, no physical network connection is necessarily required. Accordingly, apparatus 10 can be implemented in a single computer without having any physical network connection. According to such alternative implementation, publisher 28, subscriber 32, computer 18, and communication pathway 11 are all provided on a single, common computer. According to such implementation, local loop-back is supported by the computer where there is no -physical network.

More particularly, such alternative implementation provides publisher 28, subscriber 32, and communication pathway 11 within a single, common computer such that a publish/subscribe infrastructure is provided on a single machine having processing capabilities that hosts a publisher and a subscriber.

Accordingly, publisher 28, subscriber 32, infrastructure 36, and communication pathway 11 can be provided via processing circuitry in communication links on one or more computers, such as client computers 14 and 16, and server computer 18. Computers 14, 16 and 18 include memory 60, 62 and 64, and a central processing unit (CPU) 66, 68, and 70, respectively. CPUs 66, 68, and 70 each comprise processing circuitry (not shown). An application program 56 and 58 is also implemented within computers 14 and 16.

Accordingly, the publish/subscribe apparatus 10 can be provided on a single, common machine, on a plurality of machines, and even on machines that are different from machines that are hosting a publisher or a subscriber. Accordingly, a publish/subscribe mechanism 38 of PS apparatus 10 can be provided on a first machine, while one or more publishers 28 and/or subscribers 32 are provided on one or more additional, different machines. As depicted in Figure 1, the publish/subscribe mechanism of PS apparatus 10 is distributed amongst computers 14, 16 and 18, but other implementations are understood to fall within the scope of Applicant's invention as defined by the appended claims.

As utilized herein, publish/subscribe (PS) apparatus 10 includes a publish/subscribe (PS) infrastructure 36 that includes communication pathway 11. According to one implementation, such communication pathway 11 is provided at least in part by network 22. Such network 22 can be a local area network or the Internet. As utilized herein, communication pathway 11 refers to a fabric, such as a communication fabric or publish/subscribe (PS) fabric which refers to the physical entity that includes a multi-cast mechanism, channels, and physical medium for transporting information across communication pathway 11, or network 22. Accordingly, such PS fabric can be provided on one or more machines that host a publisher 28 or a subscriber 32, on communication pathway 11, or on server computer 18.

Even further optionally, communication pathway 11 comprises any medium capable of implementing electronic transfer of information from one location to another. For example, a bus provides one form of a communication pathway comprising a common pathway, or channel, formed between multiple devices. Such a bus can be an internal bus within a single, common computer, or a network bus, such as a common cable connecting stations together within a network. For example, clients and servers can be coupled together with a network bus. Even further constructions are envisioned for communication pathway 11 wherein a plurality of devices having processing circuitry, such as individual computer systems, are communicating together, and a publish/subscribe mechanism is provided within the processing circuitry provided within one or more of such devices.

Pursuant to this invention, a PS mechanism 38 provides the ability to transport messages 40, 42 of varying message types (*e.g*., structures) 44 and 46. A publisher 28 utilizes infrastructure 36 by indicating the particular type 44, 46 of message 40, 42 that publisher 28 will publish. Similarly, a subscriber 32 would utilize infrastructure 36 in order to subscribe to, or designate an interest in receiving, a particular type of message 40, 42. Channels 48 and 50 are defined by the names of message types, thereby replacing usage of prior art flat topic names.

As depicted in Figure 1, message types 44 and 46 are shown independent of one another. However, it is understood that message types 46 and 44 can take one of two forms. For example, a first form envisions message types 44 and 46 as being "unrelated message types" which create separate, distinct, unrelated message channels 48 and 50. According to an alternative implementation, message types 44 and 46 form "related message types" comprising a message super-type and a message sub-type.

For the case where message types are of an unrelated type, unrelated message types are provided by type 44 and type 46 being totally independent of one another, which divides the mechanism into two channels.

For the case where message type are related, a sub-type relationship is formed. Such related message types use message sub-types which allow for the -creation of two message channels. For example, message type 44 can be provided as a message super-type, while message type 46 is a message sub-type. According to this example, two message channels are created, channels 48 and 50, where channel 48 is associated with message super-type 44 which can include all the traffic that flows across channel 48 that is associated with sub-type 46. Accordingly, where channels 48 and 50 are related, the messages that flow across the sub-type channel 50 represent a subset of the messages that flow across the super-type channel 48.

By forcing publishers 28 and subscribers 32 to use a publish/subscribe infrastructure 36 that is based upon a message-type system, the possibility of either the publisher 28 or subscriber 32 producing or processing a message of the wrong structure is removed. Therefore, message-type names are used to partition the message space into channels for a particular PS instance.

As shown in Figure 1, a multiple component filtering mechanism 20 is provided within PS apparatus 10. More particularly, filtering mechanism 20 includes a pre-filter 24 within publisher 28 and a post-filter 26 within subscriber 32. A channel factory 30 is provided within server 18.

More particularly, pre-filter 24 includes circuitry 72 configured to identify a message type subscribed to by a subscriber 32 such that the message instance generated by publisher 28 comprises a subscribed message type. Likewise, post-filter 26 includes circuitry 74 configured to associate a particular message type with a particular multi-cast address such that subscriber 32 listening on a particular multi-cast address will receive the particular message from publish/subscribe mechanism 38. According to one construction, circuitry 72 and 74 each comprise filtering circuitry. Alternatively, circuitry 72 and 74 comprise processing circuitry.

Also according to Figure 1, sensors 54 and 56 comprise individual sensors configured to input data into publisher 28. According to one application, sensors 54 and 56 each comprise monitoring and/or processing circuitry configured to monitor customer calls. It is understood that other applications exist. However, it is also understood that other techniques can be used for inputting data into publisher 28 such as programming a client to generate published data, and therefore sensors 54 and 56 are not necessary.

PS mechanism 38 includes a channel factory 30 configured to generate individual channels, such as channels 48 and 50. Channel factory 30 includes a proxy object 34. A proxy object is an object that acts as a substitute for another object. It typically provides the same interface as the original object, and acts as a point for forwarding requests to the original as well as returning results to its clients. In distributed systems a proxy object typically resides on a different host from the original object that it is representing/substituting for, although this is not a requirement in order to be a proxy. As far as clients of a proxy object are concerned, it appears to them that they are dealing with the actual object -- they are often blissfully unaware that they are actually dealing with a proxy and not the original for which it is substituting.

Also according to Figure 1, publisher 28 includes an application 56, in the form of an application program; memory 60; and a central processing unit (CPU) 66. Similarly, subscriber 32 includes an application 58, in the form of an application program; memory 62; and a central processing unit (CPU) 68. Furthermore, server 18 includes memory 64 and central processing unit (CPU) 70.

Application of PS apparatus 10 forces a subscriber to break the filtering expression of filtering mechanism 20 into two pieces:

The first is an indication of the message type that it desires to receive, and the second is an additional filtering expression in terms of the attributes of messages of that type.

It is assumed that publishers and subscribers join/leave a particular multi-cast mechanism at a much lower frequency than messages that are sent over the mechanism. Under this assumption, each publisher is then informed of the message types to which any subscriber has subscribed. If the publisher wants to publish a message of a type in which no subscriber has interest, the infrastructure on the publisher's host will simply NOT send the message. With an appropriate choice of message types, this will then reduce the network traffic to that essential to meeting the subscriber's subscription. It is the responsibility of the infrastructure on a subscriber's host to apply the additional filtering expression to messages of the nominated type that arrive to deduce whether a particular message should be delivered to the subscriber.

Note that by basing a publisher's responsibility in filtering messages to imply matching on known subscribed types, the processing on a publishing host has been minimized to a single match on a bounded, probably small, set of values.

For environments in which more than one multi-cast address is available, the invention also defines several ways to map message types to multi-cast addresses in order to further minimize the interrupt load on subscriber hosts. By associating a particular type with a particular multi-cast address, only subscribers that are listening on that particular multi-cast address will receive the message.

Thus, application of apparatus 10 maximizes the effective use of the resources involved in an application constructed over such a PS mechanism, thus enabling scalability to larger numbers of messages, publishers, and subscribers.

Pursuant to apparatus 10, it is required that a subscriber provide two pieces of information when it subscribes: First, the type of messages that it wishes to receive and, second, an additional filtering expression in terms of field values in instances of that message type. As in Applicant's co-pending application entitled "Publish/Subscribe Apparatus and Method", European Patent Application 01300219.1, and hereby incorporated by reference herein, channels are defined via message types. The inheritance structure described therein is not exploited here other than as a shorthand for defining new message types.

It is assumed that subscribers and publishers to a particular type come and go much less frequently than messages that are published on the particular channel. If this is not true, then the traffic on the network will come to be dominated by the exchange of membership information among the bits of PS infrastructure running on the various hosts involved, causing less efficient use of the network bandwidth. Under this assumption, it is then required that the bits of the infrastructure on each publishing host be kept aware of the currently subscribed message types. With the knowledge of these message types, a publishing host will never transmit a message of a type for which there are no subscribers. For message types for which there are subscribers, the publisher transmits the message to the multi-cast address associated with that type. This action guarantees that only subscribers that are listening on that particular multi-cast address will receive the message.

Note that the effectiveness of this type/constraint split is dependent upon how much of the application domain knowledge can be captured in the type hierarchy. Since this is something that can be extended by users, the user is in control of the bandwidth efficiency mechanism. The resulting flexibility provides another advantage over existing solutions.

If there are any relationships between types and/or channels, the subscriber must be aware of these relationships and subscribe to each related channel, as it is not required that the infrastructure be aware of any relationships that exist between types. The activity occurring on the publisher side is simply the sending of messages on channels for which there is at least one subscriber.

### B. Assumptions

Several assumptions are made in setting up the PS mechanism. First, each message sent over a PS mechanism is provided with the following logical structure:

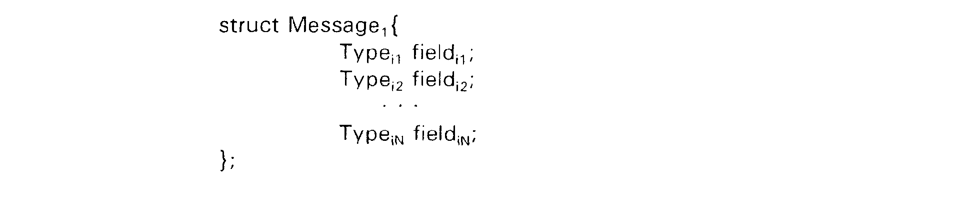

When a subscriber wishes to register with the PS mechanism, the subscriber is required to specify a message type *(e.g.,* Messageᵢ) and a filtering expression consisting of the following elements:
1. the presence of a particular field; *e.g.,* present(fieldₖ)
2. comparison of field values with constants or other field values; *e.g*., field₁ <42, field₅! = field₄₇
3. the ability to check for the inclusion of field value in a set of constants; *e.g.,* field₂ in {1 4 9 16 25}
4. the ability to check for a partial match of a string value; *e.g.,* field_{3_} "∧+44-131-"
5. logical connectives of these atoms; *e.g.,* present(field₁) && field₁ <42, field₁ <42 _ field₁ = = 85; evaluation of the connectives is terminated as soon as the result is known
6. logical negation; e.g., !present(field₄)
7. grouping operators that override default precedence; *e.g.,* ![present(field₁) && present(field₅)].

An additional requirement is made that reference to a field implicitly invokes the present() operator, as any reference to a field must fail if that field is not present. That is, fieldₖ = = 22 is equivalent to [present(fieldₖ) && fieldₖ = = 22].

### C. Specification of Message Types

### 1. Using IDL for Message Types

As documented above, the kinds of messages sent over a PS mechanism are most conveniently represented by structs in a syntax based upon OMG IDL.

OMG refers to Object Management Group, an international organization founded to endorse open standards technologies for object-oriented applications. Object Management Group is located in Framingham, MA, and maintains a website at www.omg.org. OMG specifies the Object Management Architecture (OMA), a definition of a standard object model for distributed environments, more commonly known as CORBA.

IDL refers to an Interface Definition Language which is a language used to describe the interface to a routine or function in a programming language independent manner. For example, objects in a particular distributed object environment can be defined by an IDL, which describes the services performed by the object and, in conjunction with CORBA, how data is to be passed to the object.

Unfortunately, IDL structs do not exhibit polymorphism, so they cannot be used for a message type system. However, IDL does permit the definition of attributes in an interface specification. More particularly, each attribute is shorthand for a pair of get/set accessor operations. Such attributes can be exploited in order to achieve a message type system.

### 2. Message Type Definition Rules

Each message type is defined by an IDL interface definition. The message type may inherit from one or more other message types. In addition to general data type definitions, for example, from typedef, enum, struct, union, sequence statements, the statements of the body of the interface definition are restricted to attribute declarations. Use of the any data type and interface types are disallowed. However, according to an alternative construction this restriction can be relaxed.

An extended form of attribute declarations is permitted. One exemplary syntax is as follows:
attribute <type> < name > [where <name> <relop> < value of type > [and/or < name > <relop> < value of type>]*];
<relop> is one of the values "<", ">", "< =", "> =", "= =", "!=", "_" (string match), or "in" (set inclusion). The IDL restriction is relaxed concerning redeclarations, thus allowing < name > to have been previously specified in the base interface. This action permits a sub-type to further constrain legal values of the attribute. A compiler for these specifications is then checked in order to ensure that a constraint specified for <name> is more restrictive than any previously defined constraints for <name>.

### 3. Example Message Types

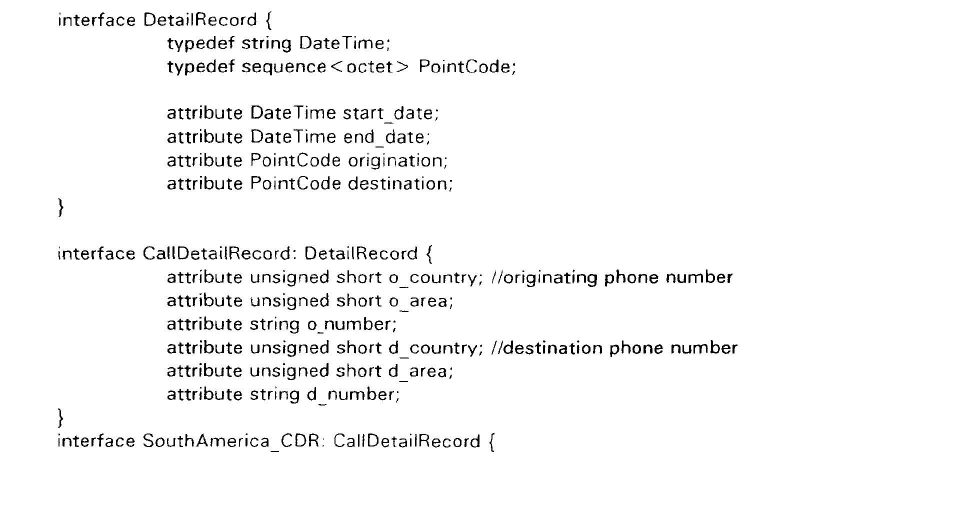

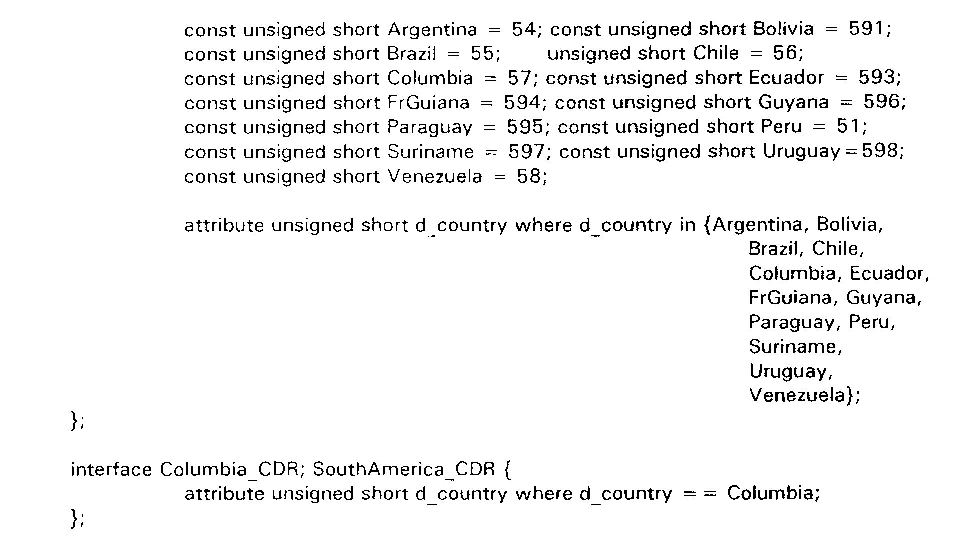

In these examples, a data type "DetailRecord" is provided which captures the start and end times of a phone call (as strings) and the originating and receiving endpoints (as sequences of octet). A "CallDetailRecord" is a "DetailRecord" that also has the originating and receiving phone numbers (as <ushort, ushort, string> triples corresponding to the + country-area-number format). A "SouthAmerica_CDR" is a "CallDetailRecord" for phone calls that terminate in South America. A "Columbia_CDR" is a "SouthAmerica_CDR" that terminates exactly in Columbia.

### 4. Actions taken by the specialized IDL compiler

From one of these specifications, a compiler takes the following actions:
a. A single implementation class for the designated target language is generated for each interface;
b. A struct is generated with identical field names as the attribute names; if the interface name is Name, then the struct is NameStruct;
c. Besides the appropriate code for the get/set methods in the target language, code for five additional methods is generated:
   (1) A constructor that takes a value of the generated struct as an input parameter and creates a fully-loaded instance of the class;
   (2) A marshal() operation that marshals the contents of the object into a buffer;
   (3) Another constructor that takes a marshaled buffer and generates a fully-loaded instance of the class;
   (4) A match() operation that takes a constraint expression in terms of the names of the attributes and literals and returns a boolean;
   (5) A load() operation that takes a value of the generated struct as an input parameter and reloads the attributes in the class instance.

Both a publisher of this particular message type and a subscriber to this particular message type will be written to use instances of this generated class.

### 5. Examples of publishers and subscribers

In the following, it is assumed that the publisher is generating "Columbia_CDRs", and the subscriber is inspecting all "Columbia_CDRs" generated by the system.

### D. Actions in a Publisher

The publisher generates "Columbia_CDRs" based upon data the publisher receives from sensors. The following pseudo-code shows the logic of the publisher:
Create a "Columbia_CDR" channel instance through invocation of a method on a channel factory
Create a Columbia_CDR instance
While there are more Columbia_CDRs to send
   Fill in the fields of a Columbia_CDRStruct
   Invoke the load() method on the Columbia_CDR instance
   Invoke send() on the channel, passing the Columbia_CDR instance
Destroy the channel instance

### E. Actions in a Subscriber

The subscriber subscribes to receive all instances of "Columbia_CDR". The following pseudo-code shows the logic of the subscriber:
Create a "Columbia_CDR" channel instance through invocation of a method on a channel factory
Subscribe to the "Columbia_CDR" channel instance, indicating additional constraints and a send() routine in the subscriber that will be invoked every time a message is received that matches the subscriber's request
< sleep > or do something else on your thread
Unsubscribe from the channel instance when appropriate

### 1. Transporting the Data

When a subscriber subscribes to a type, the fabric runtime in each publisher is informed. When a Publisher sends() a message:
a. if there are no subscribers to that type, the runtime simply returns to the caller;
b. the marshal() operation is invoked on the message instance upon which the send() operation was invoked, serializing the data into a buffer;
c. the buffer is multi-cast to each subscriber to that type.

Upon receipt of a message instance, the receiving fabric runtime constructs a new instance of the message class from the marshaled buffer. The match() method is invoked with the constraint expression provided at subscription time. If the result of invoking match() is TRUE, then the subscriber is upcalled with the message class instance.

### 2. Mapping to Multi-Cast Addresses

It will be observed in both pieces of pseudo-code above that a channel factory is consulted to obtain a proxy for sending/receiving messages of a particular type. The channel factory consists of two portions of logic:
a. a proxy object, in the address space of the publisher/subscriber, that interacts with the channel factory server and the PS mechanism infrastructure;
b. the channel factory server represents the global information associated with the PS mechanism; in particular, it keeps track of the known message types and the set of active publishers and subscribers, and maps between message types and multi-cast addresses.

The channel factor server can use several algorithms for the mapping of message types to multi-cast addresses.
(1) The simplest algorithm results if there is only a single multi-cast address, in that all messages are sent over the same multi-cast channel. Of course, this does not do much for minimizing the load on the receivers, as all receivers will see all messages for all subscribed types.
(2) Assuming that the network interface cards for all hosts connected to the network support at least N_{MC} addresses, the algorithm used by the channel factory server will depend upon the amount of information that the server has about the message traffic:
   (a) In the absence of any additional data about the message traffic, the factory server will assign a different multi-cast address to each message type until all N_{MC} addresses are assigned. Any additional message types will each be assigned to a multi-cast address chosen at random from the set of N_{MC} addresses. Of course, as soon as there is the possibility of more than one message type being sent over the same multi-cast address, it forces the on-the-wire representation of the message to contain the name of the message type to permit receivers to demultiplex appropriately.
   (b) It is possible for the channel factory server to subscribe to each multi-cast address. It initially assigns multi-cast addresses until N_{MC} types have been assigned, as in the previous example. It counts messages received per unit time on each channel. When it needs to assign a new type to one of the already assigned multi-cast addresses, it can assign it to the address that currently has the lowest message rate.
   (c) If one was forcing the publishers to be cognizant of the relationships between message types (as represented by an inheritance hierarchy), the assignment of multi-cast addresses may be organized around having related types share multi-cast addresses.

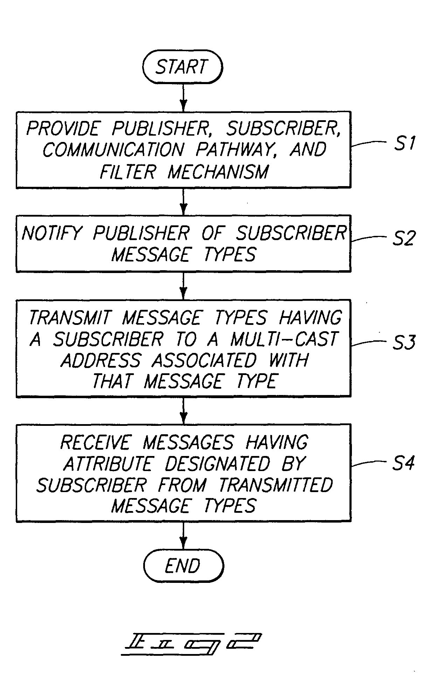

Figure 2 illustrates a method for filtering the transmission of messages over a publish/subscribe mechanism as a first-level logic flow diagram for the programming of a publish/subscribe apparatus.

In Step "S1", the process proceeds with providing a publisher, a subscriber, a communication pathway extending between the publisher and the subscriber, and a filtering mechanism. The communication pathway is operative to convey publish/subscribe message instances from the publisher to the subscriber. After performing Step "S1", the process proceeds to Step "S2".

In Step "S2", the process proceeds by notifying the publisher of message types that are currently subscribed to by the subscriber. After performing Step "S2", the process proceeds to Step "S3".

In Step "S3", the process proceeds with transmitting message types for which there is a subscriber to a multi-cast address associated with that message type. After performing Step "S3", the process proceeds to Step "S4".

In Step "S4", the process proceeds with receiving messages having an attribute designed by the subscriber from the transmitted message types. After performing Step "S4", the process terminates.

In compliance with the statute, the invention has been described in language more or less specific as to structural and methodical features. It is to be understood, however, that the invention is not limited to the specific features shown and described, since the means herein disclosed comprise preferred forms of putting the invention into effect. The invention is, therefore, claimed in any of its forms or modifications within the proper scope of the appended claims appropriately interpreted in accordance with the doctrine of equivalents.

## Claims

1. A publish/subscribe apparatus (10), comprising:
a publisher (28) operative to generate a message instance;
a subscriber (32) operative to receive the message instance;
a communication pathway (11) having a publish/subscribe mechanism (38); and
a filtering mechanism (20) having a first filter (24) provided by the publisher (28) and a second filter (26) provided by the subscriber (32).

2. The publish/subscribe apparatus (10) of claim 1 wherein the first filter (24) comprises circuitry (72) configured to identify message types subscribed to by the subscriber (32) such that the message instance generated by the publisher (28) comprises an identified message type.

3. The publish/subscribe apparatus (10) of claim 1 wherein the second filter (26) comprises circuitry (74) that matches a constraint expression, in terms of attribute values, to received messages, wherein the communication pathway (11) is configured to associate a particular message type with a particular multi-cast address such that a subscriber (32) listening on a particular multi-cast address will receive the particular message from the publish/subscribe mechanism (38).

4. The publish/subscribe apparatus (10) of claim 1 wherein the subscriber (32) subscribes to a type of message, and the publish/subscribe mechanism (38) distributes matched message instances from the publisher (28) to the subscriber (32) for the subscribed type of message.

5. The publish/subscribe apparatus (10) of claim 1 wherein the subscriber (32) subscribes to a message type.

6. The publish/subscribe apparatus (10) of claim 1 wherein the subscriber (32) is listening on one multi-cast address, and message types are mapped to at least one multi-cast address, with the subscriber (32) receiving any message of the message types that are mapped to the one multi-cast address.

7. A method for filtering the transmission of messages over a publish/subscribe mechanism (10), comprising:
providing a publisher (28), a subscriber (32), a communication pathway (11) extending between the publisher (28) and the subscriber (32), and a filter mechanism (20), wherein the communication pathway (11) is operative to convey publish/subscribe message instances from the publisher (28) to the subscriber (32);
notifying the publisher (28) of message types currently subscribed to by the subscriber (32);
transmitting message types for which there is at least one subscriber (32) to that message type; and
receiving messages having attributes designated by the subscriber (32) from the transmitted message types.

8. The method of claim 7 wherein the steps of notifying the publisher (28) of message types and transmitting message types comprises filtering message types by identifying message types subscribed to by the subscriber (32) such that the message instance generated by the publisher (28) comprises an identified message type.

9. The method of claim 7 wherein the transmitting message types and the receiving message types comprise filtering a particular message type such that a subscriber (32) listening on a particular multi-cast address will receive the particular message from the publish/subscribe mechanism (38).

10. The method of claim 7 wherein the filter mechanism (20) comprises a pre-filter (24) provided at the publisher (28), and a post-filter (26) provided at the subscriber (32).
